# EUROPÄISCHE PATENTSCHRIFT

(11) **EP 3 644 726 B1**
(45) Veröffentlichungstag und Bekanntmachung des Hinweises auf die Patenterteilung: **31.01.2024**
(21) Anmeldenummer: 18743386.7
(22) Anmeldetag: 27.06.2018
(51) Int. Cl.: A01M 29/06

(54) **ANORDNUNG EINER VOGEL-VERGRÄMVORRICHTUNG**
ARRANGEMENT OF A BIRD SCARING DEVICE
MISE EN PLACE D'UN DISPOSITIF D'EFFAROUCHEMENT DES OISEAUX

(30) Priorität: 27.06.2017 DE 102017114261
(43) Veröffentlichungstag der Anmeldung: 06.05.2020
(73) Patentinhaber: Priedemann Facade-Lab GmbH, 14979 Großbeeren (DE)
(72) Erfinder: PRIEDEMANN, Wolfgang, 12209 Berlin (DE); DENZ, Paul-Rouven, 14057 Berlin (DE)
(74) Vertreter: Bittner, Thomas L.
(86) Internationale Anmeldenummer: PCT/DE2018/100591
(87) Internationale Veröffentlichungsnummer: WO 2019/001640

(56) Entgegenhaltungen:
- DE-A1-102012 007 521
- GB-A- 2 510 405
- JP-A- 2007 259 794
- JP-A- 2011 155 856
- KR-A- 20120 069 001
- KR-U- 20110 008 394
- US-A1- 2014 259 879

## Beschreibung

Die Erfindung betrifft eine Anordnung mit einer Gebäudehülle und einer Vogel-Vergrämvorrichtung.

### Hintergrund

Vogel-Vergrämvorrichtungen dienen insbesondere dazu, eine Beschädigung von Gebäuden durch Vögel zu vermeiden.

In dem Dokument DE 10 2012 007 521 A1 wird eine Vorrichtung zum Vergrämen von Vögeln mit einem Rotor beschrieben, der bei Halt suchenden Vögeln aus einer stabilen Gleichgewichtsstellung so ausgelenkt wird, dass sich die dort haltsuchenden Vögel nicht halten können. Der Rotor weist zumindest eine Präsentationsfläche auf, wobei die Präsentationsfläche gegenüber einer Drehachsenmitte schräg gestellt ist.

Im Dokument DE 20 2016 003 093 U1 ist eine Tauben-Vergrämung zur Vermeidung von Verschmutzung auf Straßenlaternen offenbart, die zeitlich veränderliche Magnetfelder nutzt, die den Magnetsinn der Vögel stören.

Im Dokument DE 20 2013 004 544 U1 ist eine Multifunktions-Illuminationsvorrichtung zum natürlichen Anlocken und / oder Vertreiben von Ungeziefer und Nagern aller Art offenbart.

Im Dokument DE 296 10 206 U1 ist eine elektrische Schutzvorrichtung gegen Vögel offenbart. Das Dokument DE 20 2010 015 431 U1 offenbart eine Vorrichtung zum Verscheuchen und Vergrämen von flugfähigen Vögeln, insbesondere Möwen. Die Vorrichtung weist mehrere einzelne Drähte auf, welche mit einem Kolben am Ende verschweißt sind und an einem Rohr verschiebbar geführt werden können. Es ist eine Befestigung von einem dünnen Drahtseil vorgesehen, an deren Ende sich eine Schlaufe für einen Handgriff befindet. Weiterhin ist ein Endstück vorgesehen, welches die Drähte führt und sich oben am Rohr befindet. Abschlussstücke sind am Ende der Drähte aufgepresst. Angeschweißte Ringe dienen zum Montieren an einem Schiff.

Im Dokument DE 10 2013 212 938 A1 ist eine Vogelvertreibevorrichtung offenbart, welche einen Lautsprecher und eine Lautsprecher-Steuereinheit einschließt. Die Lautsprecher-Steuereinheit steuert den Lautsprecher zum Emittieren einer Ultraschallschallwelle auf ein vorher festgelegtes Gebiet hin, sodass die Ultraschallschallwelle während der Übertragung durch Luft hindurch zu einer hörbaren Frequenz moduliert wird, um ein Vertreibegeräusch mit der hörbaren Frequenz in dem vorher festgelegten Gebiet zu erzeugen, damit Vögel vertrieben werden.

Das Dokument DE 20 2011 106 690 U1 offenbart eine Oberflächenausrüstung für Innenausstattungen, bestehend aus einem Träger, einem auf dem Träger aufgebrachten Linsen- bzw. Prismenrasterbild und einer das Linsen- bzw. Prismenrasterbild isolierenden transparenten Schutzschicht.

Dokument GB 2 510 405 A offenbart ein holografisches Bild eines Greifvogels, das auf einem Bildschirm gezeigt wird und mit einem akustischen System gekoppelt wird, das die Jagdrufe des Greifvogels oder den Notruf einer Schädlingsart ausgibt.

Im dem Dokument KR 2012 0069001 A wird eine Vorrichtung zur Abwehr von Vögeln und Wildtieren offenbart, die ein Solarpanel, einen Elektrizitätsspeicher, einen optischen Sensor, einen Hologrammreflektor, eine Leuchtdiode, eine Lasereinheit, eine Schallemissionseinheit und eine Abwehrspeichereinheit umfasst.

In den Dokumenten JP 2007-259794 A sowie JP 2011-155856 A sind Vogel-Vergrämvorrichtungen offenbart, bei dem ein Bauteil mit einem Lentikularbild aufrecht stehen federnd gelagert ist, derart, dass das Lentikularbild unter dem Einfluss von Wind schwingen kann. Ein solches Schwingen unter Einfluss von Wind ist im Dokument KR 20-2011-0008394 A für eine Vergrämvorrichtung mit stereoskopischen Bild an einem Telefonmast ebenso vorgesehen.

Im Dokument US 2014 / 0259879 A1 ist offenbart, an den aufrechtstehenden Wänden eines Abfallbehälters ein Lentikularbild außenseitig anzubringen.

### Zusammenfassung

Aufgabe der Erfindung ist es, eine Anordnung mit einer verbesserten Vogel-Vergrämvorrichtung anzugeben, die flexibel einsetzbar und an unterschiedliche Anwendungsaufgaben anpassbar ist.

Zur Lösung ist eine Anordnung nach dem unabhängigen Anspruch 1 geschaffen. Ausgestaltungen sind Gegenstand von abhängigen Unteransprüchen.

Die Technologien dienen dazu, Schäden an Bausubstanz und hygienische Verunreinigungen durch Taubenkot zu verhindern und den damit verbundenen volkswirtschaftlichen Schaden zu vermindern.

Die Vogel-Vergrämvorrichtung ist auf der Gebäudehülle angeordnet oder in diese integriert . Der Lentikular-Effekt, also zum Beispiel das Erscheinen unterschiedlicher Bilder im Bereich des Lentikularbildes in Abhängigkeit vom Blickwinkel auf das Lentikularbild, wird bei der Vogel-Vergrämvorrichtung genutzt, um ein Niederlassen der Vögel im Bereich der Vogel-Vergrämvorrichtung zu unterbinden. Je nach Blickwinkel werden für die Vögel unterschiedliche Bilder oder Bildstreifen an der Gebäudehülle sichtbar, sodass für die Vögel der Eindruck bewegter Bilder entstehen kann. Alternativ oder ergänzend kann der Lentikular-Effekt einen sogenannten Fly-Eye-Effekt umfassen, wenn Lentikular-Folien verwendet werden, welche eine Vielzahl an Punktlinsen anstatt gerichteter Linsen-Rillen aufweisen. Hierdurch wirkt das Bild aus allen Blickrichtungen, während bei herkömmlichen Lentikularfolien der Effekt winkelabhängig ist.

Es wird das Anlanden durch Verunsicherung / Irritation / optischer Belästigung der Vögel auf den mit der Vogel-Vergrämvorrichtung versehenen Teilen der Gebäudehülle vermieden. Aufgrund des sich verändernden Anflugverhaltens wie Anflugwinkel und / oder Geschwindigkeit ergibt sich für den Vogel bei jedem Anflugversuch einen veränderten Effekt. Hierdurch wird ein Gewöhnungseffekt bei den Vögeln vermieden, und die dauerhafte Wirkungsweise der Vogel-Vergrämvorrichtung ist gewährleistet.

Eine Montage in der Gebäudehülle kann zum Beispiel wie folgt ausgeführt sein: Anordnung im Scheibenzwischenraum einer Isolierverglasung, Einlaminieren in ein Verbundglas, oder eine Glasscheibe ersetzt Lentikularfolie durch entsprechende Oberflächenstruktur.

Das Bauteil ist mit einem Platten- und / oder einem Folienmaterial gebildet. Das Platten- oder das Folienmaterial können aus einem UV-beständigen transparenten Kunststoff bestehen.

Das Bauteil kann als ein Fassaden- oder ein Fassadenverkleidungsbauteil ausgeführt sein. Das Bauteil kann opak sein.

Das Fassadenverkleidungsbauteil kann eine Fensterscheibe oder eine Fassadenverglasung sein.

Bei dem Bauteil weist eine Montagefläche ein Haftmittel auf. Die Montagefläche ist rückseitig an dem Bauteil angeordnet, sodass das Haftmittel auf der Rückseite des Bauteils angeordnet ist. Bei dem Haftmittel kann es sich um einen Klebstoff oder ein Klebeband handeln, beispielsweise eine Klebeschicht an dem Bauteil.

An dem Bauteil kann außerdem eine Befestigungseinrichtung angeordnet sein. Alternativ oder ergänzend zur Montage des Bauteils mittels des Haftmittels ist die Befestigungseinrichtung eingerichtet, das Bauteil an der Gebäudehülle zu befestigen, sodass das Bauteil auf der Gebäudehülle oder in diese integriert montiert ist. Zum Beispiel kann eine Niet- und / oder eine Schraubverbindung und / oder eine Klemmvorrichtung und / oder eine Klickverbindung und / oder eine Klettverbindung zum Befestigen vorgesehen sein.

Das Bauteil kann eingerichtet sein, mittels Trennverfahren in mehrere Teilbauteile getrennt zu werden, bei denen die Sichtfläche jeweils zumindest teilweise von einem zugeordneten Lentikularbild bedeckt ist. In einer Ausgestaltung kann vorgesehen sein, dass das Bauteil, bei dem die Sichtfläche zumindest teilweise mit dem Lentikularbild bedeckt ist, als Material auf einer Rolle bereitgestellt wird, sodass von der Rolle Teilbauteile abgetrennt werden können, beispielsweise mittels Scheren, um anwendungsbezogen maßgerechte Teilbauteile mit Lentikularbild für die Vogel-Vergrämvorrichtung bereitzustellen.

Das Bauteil kann mit einem Trägerbauteil aus einem Trägermaterial aus der folgenden Gruppe von Trägermaterialien angeordnet sein: Metall, Naturstein, Keramik, Glas, Kunststoff, Composite-Material und Beton. Bei dem Trägerbauteil kann es sich beispielsweise um eine Platte, einen Baustein oder ein Betonbauteil handeln. Beispielsweise kann das Lentikularbild auf dem Trägerbauteil angeordnet sein, indem das Platten- oder das Folienmaterial mit dem Lentikularbild hierauf angeordnet wird.

Das Bauteil ist ein flächiges Bauteil.

Die Vogel-Vergrämvorrichtung ist auf einem horizontal oder einem schräg zur Horizontalrichtung ausgerichteten Flächenabschnitt der Gebäudehülle angeordnet.

Der horizontal oder schräg zur Horizontalrichtung ausgerichtete Flächenabschnitt ist eine potenzielle Stand- oder Landefläche für Vögel an der Gebäudehülle.

Die Sichtfläche ist mit dem Lentikularbild an der Gebäudehülle horizontal oder schräg zur Horizontalrichtung ausgerichtet.

Das Bauteil kann auf einem Trägerbauteil angeordnet sein.

Insbesondere horizontal oder schräg zur Horizontalrichtung ausgerichtete Flächen der Gebäudehülle können von Vögeln zum Anlanden genutzt werden. Hierdurch können Stand- oder Landeflächen für die Vögel bestehen. Ein Vergrämschutz im Bereich solcher Abschnitte der Gebäudehülle ist von besonderer Bedeutung.

Das Lentikulatbild kann Folgendes aufweisen: Greifvogelsilhouetten; Erkennungsmerkmale von Greifvögeln (Konturen, Gefiedermuster, Augen, Schnabel etc.) und oder Motive von Wasser, Stacheln, optische Verformung der Oberfläche (Tiefenstaffelung, Vor- und Rücksprünge, Schrägen, Rundungen etc.), Farbkontraste und -verläufe und / oder UV-reflektierende Farben (für Mensch unsichtbar, für Vogel sichtbar).

Es kann so eine Integration des Lentikular-Effekts (bewegtes / sich veränderndes / 3D Bild durch optische Prismen, welche je nach Blickwinkel unterschiedliche Bildstreifen sichtbar machen) in die Gebäudehülle erreicht werden, zum Beispiel in der Horizontalen (Gesimse, Attiken, Vorsprünge, Dachkanten etc.), um optische Vergrämungsreize zur Abwehr von Vögeln bereitzustellen, beispielweise Stadttauben und Möwen, bzw. zum Verhindern des Anlandens von Vögeln auf diesen Flächen.

Zur Vermeidung des Anprallens von Vögeln an Gebäudehüllen kann das Bauteil auch in der Vertikalen oder schräg zur Vertikalrichtung angebracht werden.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Vogel-Vergrämvorrichtung mit einem Bauteil, bei dem eine Sichtfläche zumindest teilweise mit einem Lentikularbild bedeckt ist; und
- Fig. 2: eine Anordnung mit einem Abschnitt einer Gebäudehülle, welcher mittels einer Vogel-Vergrämvorrichtung geschützt ist.

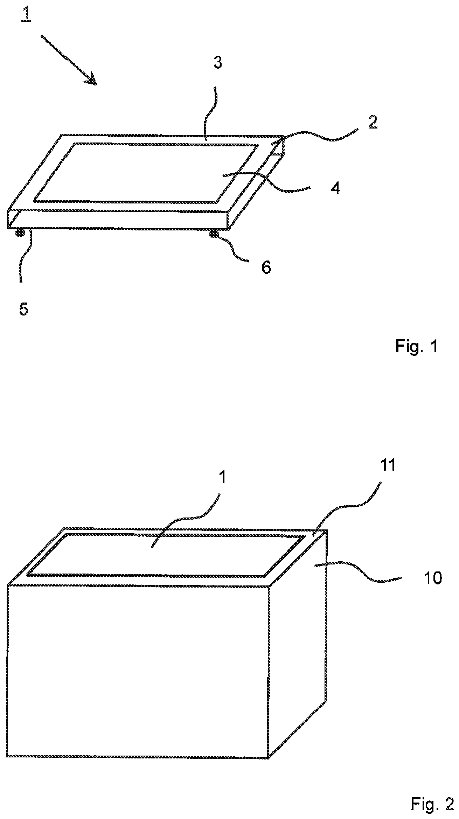

Fig. 1 zeigt eine schematische Darstellung einer Vogel-Vergrämvorrichtung 1 mit einem Bauteil 2, bei dem eine Sichtfläche 3 größtenteils mit einem Lentikularbild 4 bedeckt ist. In Eckbereichen 5 ist eine Befestigungsvorrichtung 6 vorgesehen, die eingerichtet ist, die Vogel-Vergrämvorrichtung 1 an einer Gebäudehülle (nicht dargestellt) zu montieren, beispielsweise mittels einer Niet- oder einer Schraubverbindung.

Fig. 2 zeigt eine schematische Darstellung eines Abschnitts einer Gebäudehülle 10 mit einer potentiellen Stand- oder Landefläche für Vögel 11, die mit der Vogel-Vergrämvorrichtung aus Fig. 1 bedeckt ist.

## Patentansprüche

1. Anordnung, mit
- einer Gebäudehülle (10);
- einem horizontal oder schräg zur Horizontalrichtung ausgerichteten Flächenabschnitt der Gebäudehülle (10), der eine potenzielle Stand- oder Landefläche für Vögel (11) an der Gebäudehülle (10) ist; und
- einer Vogel-Vergrämvorrichtung (1), die auf dem horizontal oder schräg zur Horizontalrichtung ausgerichteten Flächenabschnitt der Gebäudehülle (10) befestigt ist; wobei die Vogel-Vergrämvorrichtung (1) ein flächiges Bauteil (2) aufweist,
- das aus einem Platten- und / oder einem Folienmaterial aus einem UV-beständigen transparenten Kunststoff oder einer Glasscheibe gebildet ist,
- bei dem ein Lentikularbild (4) eine Sichtfläche (3) zumindest teilweise bedeckt, wobei die Sichtfläche (3) mit dem Lentikularbild (4) an der Gebäudehülle (10) horizontal oder schräg zur Horizontalrichtung ausgerichtet ist;
- das auf der Rückseite eine Montagefläche mit einem Haftmittel und / oder einer Befestigungseinrichtung (6) aufweist und
- das mittels des Haftmittels und / oder der Befestigungseinrichtung (6) an der Gebäudehülle (10) befestigt ist.

2. Anordnung nach Anspruch 1, **dadurch gekennzeichnet, dass** das Bauteil (2) als ein Fassadenbauteil oder ein Fassadenverkleidungsbauteil ausgeführt ist.

3. Anordnung nach Anspruch 1 oder 2, **dadurch gekennzeichnet, dass** das Fassadenverkleidungsbauteil eine Fensterscheibe oder eine Fassadenverglasung ist.

## Claims

1. Arrangement, with
- a building cover (10);
- a surface section of the building cover (10) aligned horizontally or inclinedly relative to the horizontal direction, which is a potential standing or landing surface for birds (11) on the building cover (10); and
- a bird scarecrow device (1), which is fastened to the surface section of the building cover (10) aligned horizontally or inclinedly relative to the horizontal direction;
wherein the bird scarecrow device (1) has a flat component (2),
- which is comprised of a plate and/or a film material made of a UV-resistant transparent plastic or a glass pane,
- in which a lenticular image (4) at least partially covers a visual surface (3), wherein the visual surface (3) with the lenticular image (4) on the building cover (10) is aligned horizontally or inclinedly relative to the horizontal direction,
- which has an assembly surface with an adhesive and/or a fastening device (6) on the rear side, and
- which is fastened to the building cover (10) by means of the adhesive and/or the fastening device (6).

2. The arrangement according to claim 1, **characterized in that** the component (2) is designed as a façade component or a façade cladding component.

3. The arrangement according to claim 1 or 2, **characterized in that** the façade cladding component is a windowpane or a façade glazing.

## Revendications

1. Ensemble, comprenant
- une enveloppe (10) de bâtiment ;
- un segment de surface de l'enveloppe (10) de bâtiment, orienté à l'horizontale ou à l'oblique de la direction horizontale, qui est une surface potentielle de pose ou d'atterrissage pour des oiseaux (11) sur l'enveloppe (10) de bâtiment ; et
- un dispositif d'effarouchement (1) des oiseaux, qui est fixé sur le segment de surface de l'enveloppe (10) de bâtiment orienté à l'horizontale ou à l'oblique de la direction horizontale,
le dispositif d'effarouchement (1) des oiseaux comportant un élément constitutif (2) plan,
- qui est constitué d'une matière en panneau et / ou en film en une matière plastique transparente, résistant aux UV ou d'une vitre en verre,
- sur lequel une image lenticulaire (4) recouvre au moins partiellement une surface visible (3), la surface visible (3) avec l'image lenticulaire (4) étant orientée à l'horizontale ou en oblique de l'horizontale sur l'enveloppe (10) de bâtiment,
- qui sur la face arrière comporte une surface de montage pourvue d'un produit adhérent et / ou d'un système de fixation (6) et
- qui est fixé sur l'enveloppe (10) de bâtiment au moyen du produit adhérent et / ou du système de fixation (6).

2. Ensemble selon la revendication 1, **caractérisé en ce que** l'élément constitutif (2) est conçu sous la forme d'un élément constitutif de façade ou d'un élément constitutif d'un habillage de façade.

3. Ensemble selon la revendication 1 ou 2, **caractérisé en ce que** l'élément constitutif d'un habillage de façade est une vitre de fenêtre ou un vitrage de façade.
